# EUROPEAN PATENT SPECIFICATION

(11) **EP 1 424 849 B1**
(45) Date of publication and mention of the grant of the patent: **22.11.2006**
(21) Application number: 03021815.0
(22) Date of filing: 26.09.2003
(51) Int. Cl.: H04N 1/60, G06F 3/12, H04N 1/00

(54) **Printing control method, image data creating apparatus, and data for image creation**
Verfahren zur Steuerung des Druckens, Bilddatenerzeugungsgerät und Daten zur Bilderzeugung
Procedè de commande d'impression, appareil de creation de données d'image et des données pour la generation d'image

(30) Priority: 21.11.2002 JP 2002338168
(43) Date of publication of application: 02.06.2004
(73) Proprietor: Dainippon Screen Mfg. Co., Ltd., Kyoto 602 (JP)
(72) Inventor: Hatayama, Fumihiro, Dainippon Screen Mfg. Co. Ltd., Horikawa-dori Kamikyo-ku Kyoto 602-8585 (JP)
(74) Representative: Kilian, Helmut

(56) References cited:
- EP-A- 0 322 879
- EP-A- 0 566 914
- US-A- 5 224 421
- US-A- 6 006 013
- US-A- 6 137 903
- PATENT ABSTRACTS OF JAPAN vol. 1999, no. 14, 22 December 1999 (1999-12-22) & JP 11 240137 A (MITSUBISHI HEAVY IND LTD), 7 September 1999 (1999-09-07)
- PATENT ABSTRACTS OF JAPAN vol. 2000, no. 10, 17 November 2000 (2000-11-17) & JP 2000 187735 A (XEROX CORP), 4 July 2000 (2000-07-04) & US 6 715 127 B1 (ESCHBACH REINER ET AL) 30 March 2004 (2004-03-30)

## Description

### BACKGROUND OF THE INVENTION

### 1. Field of the Invention

This invention relates to a printing control method, an image data creating apparatus and data for image creation.

### 2. Description of the Related Art

Generally, prints are made through a PDL (Page Description Language) data creating process for creating PDL data by editing, retouching and composing pages based on picture and character data, a platemaking data creating process for creating platemaking data by obtaining raster data from the PDL data, and a printing process for performing printing based on the platemaking data created in the platemaking data creating process. In each of these processes, image data are corrected and color tones controlled in order to produce prints of desired color tones.

To facilitate the above image data correction and color tone control, an image processing method has been proposed in which a representative color is selected from an image, and color tones are controlled with reference to this representative color (JP 2000-99699 A).

The PDL data creating process, platemaking data creating process and printing process noted above are each performed by a different operator. Thus, the intents of the operator of a preceding process regarding color tones and the like of print images are not conveyed to the operator of the next process. It is difficult for the operator of a subsequent process to understand, for example, special intents about the colors of parts such as pictures and characters designated in the PDL data creating process, a manner of matching between the parts, and a matching priority.

This could result in inappropriate prints deviating from the intents of color tone control of the operator of a preceding process. In order to avoid such inappropriate prints being produced in a large quantity, it is necessary to perform a complicated operation to make a small number of prints for trial, to check the prints with the operator of the preceding process, and then to produce a large number of prints.

EP-A-0 322 879 discloses a printing control method having an image data creating process and a printing process where the image data creation process includes a representative point setting step and a representative point storing step, and the printing process includes an information receiving step, a print executing step and a color tone controlling step.

US-A-5 224 421 relates to control of ink feed so as to achieve a high degree of conformity between an original and a printed product. The method for adjusting color in a printing process comprises a representative point setting step on the image data for setting a representative point per ink zone and a color tone controlling step.

Both in EP-A-0 322 879 and US-A-5 224 421 the representative points are used to control the image quality in a local printing process.

### SUMMARY OF THE INVENTION

The object of this invention, therefore, is to provide a printing control method, an image data creating apparatus and data for image creation, for producing prints with an appropriate color tone control by assuring reliable communication of the intents of color tone control from a preceding process to a next process.

The above object is fulfilled, according to this invention, by a printing control method according to claim 1 and an image data creating apparatus according to claim 7.

This printing control method readily realizes prints with color tones controlled properly. Thus, the control method is effective to avoid inappropriate prints being produced in a large quantity.

In a preferred embodiment of the invention, the representative point information includes information on color tones at the representative points.

Other features and advantages of the invention will be apparent from the following detailed description of the embodiments of the invention.

### BRIEF DESCRIPTION OF THE DRAWINGS

For the purpose of illustrating the invention, there are shown in the drawings several forms which are presently preferred, it being understood, however, that the invention is not limited to the precise arrangement and instrumentalities shown.
Fig. 1 is an explanatory view showing a printing control system according to this invention;
Fig. 2 is a flow chart of a PDL data creating process;
Fig. 3 is a flow chart of a platemaking data creating process;

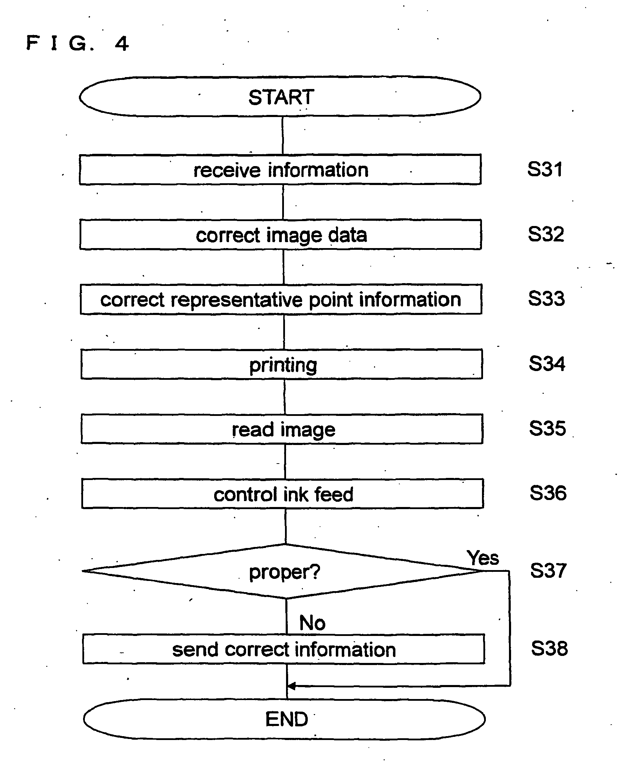

Fig. 4 is a flow chart of a printing process;
Fig. 5 is an explanatory view showing a structure of data for image creation;
Fig. 6 is an explanatory view showing a structure of data for image creation; and
Fig. 7 is an explanatory view showing representative points on image data.

### DESCRIPTION OF THE PREFERRED EMBODIMENTS

An embodiment of this invention will be described hereinafter with reference to the drawings.

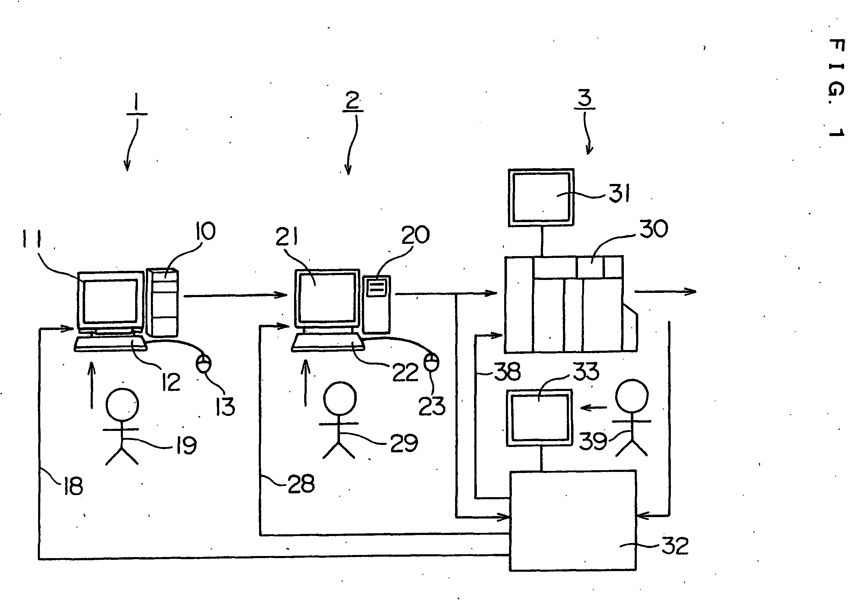

Fig. 1 is an explanatory view showing a printing control system according to this invention.

This printing control system is used for producing prints from image data. The system includes a PDL data creating process 1 for creating PDL data, a platemaking data creating process 2 for creating platemaking data based on the PDL data created in the PDL data creating process 1, and a printing process 3. The above PDL data creating process 1 and platemaking data creating process 2 correspond to the image data creating process for creating image data for making prints. The above printing process 3 performs printing based on the image data created in the image data creating process.

The PDL data creating process 1 uses an image processing unit 10 having a CRT 11 acting as a display device, and a keyboard 12 and a mouse 13 acting as input devices. The platemaking data creating process 2 uses an image processing unit 20 having a CRT 21 acting as a display device, and a keyboard 22 and a mouse 23 acting as input devices. The printing process 3 uses a printing machine 30 having a touch panel 31 acting as an input and display device, and a color tone control apparatus 32 having a touch panel 33 acting as an input and display device.

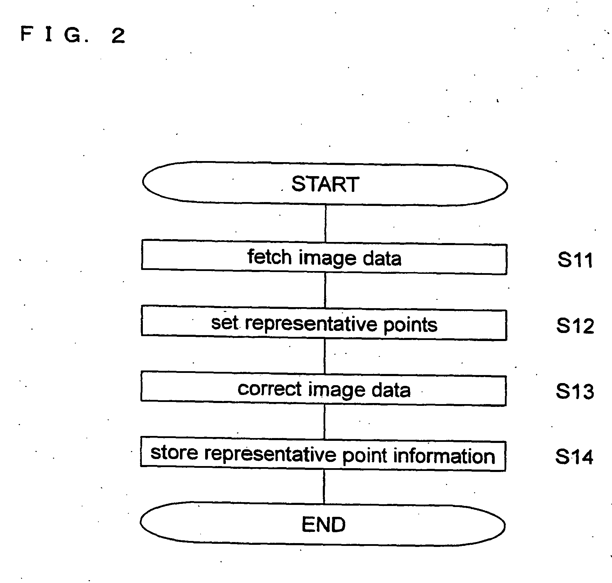

The PDL data creating process 1 is a process for creating PDL (Page Description Language) data by editing, retouching and composing pages. The PDL data creating process 1 is performed according to the flow chart shown in Fig. 2.

Specifically, in the PDL data creating process 1, image data such as of pictures or characters is fetched first (step S11). Then, pages are edited, retouched and composed by using this image data.

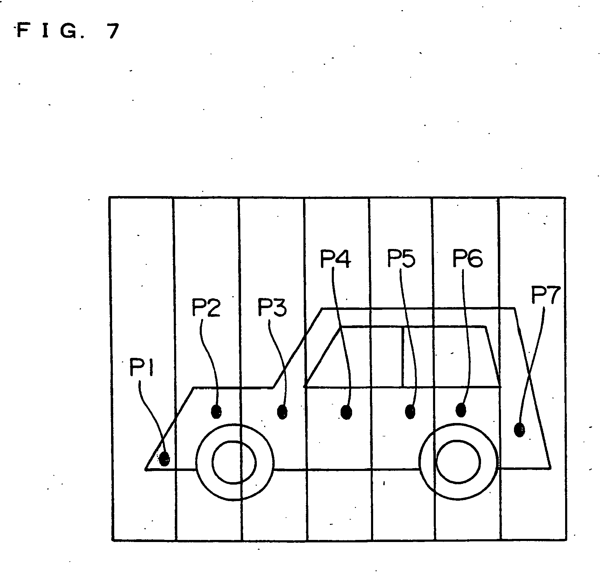

Next, representative points are selected for use in a color control of images (step S12). Fig. 7 shows examples of representative points on a print. Image data representing the print is divided into seven areas corresponding to seven ink key areas of the printing machine 30. Representative points P1-P7 are designated for the respective areas as important points for controlling color tones and the like of the image. These representative points reflect the intents of the operator 19 in charge of the PDL data creating process 1. Representative points may be selected, for example, from areas with representative colors characterizing each image. The representative points may be set by the operator 19 in charge of the PDL data creating process 1, who operates the keyboard 12 and mouse 13 while looking at the CRT 11. Alternatively, for example representative points may be set automatically by using a histogram as described in Japanese Unexamined Patent Publication 2000-99699 noted hereinbefore. It is preferred that the representative points are set for the respective ink key areas of the printing machine 30. A plurality of representative points may be set for each ink key area, as necessary.

Next, the image data is corrected and stored (step S13). When correcting the image data, color space is converted by using a scene profile and a color space profile of each image. At this time, the image data is corrected so that color tones at the above representative points may agree with target color tones.

After correcting the color tones of the image data, positions of representative points may be set to the corrected image data.

Subsequently, representative point information is stored (step S14). This representative point information includes at least information on the positions of the representative points and, preferably, includes also information on the color tones at the representative points. The information on the color tones at the representative points includes information on the corrected color tones, and may include also information on the color tones before the correction. This representative point information is combined with the image data for creating prints, corrected at step S13, to form data for image creation. This data is stored on a storage medium such as a hard disk or magneto-optical disk.

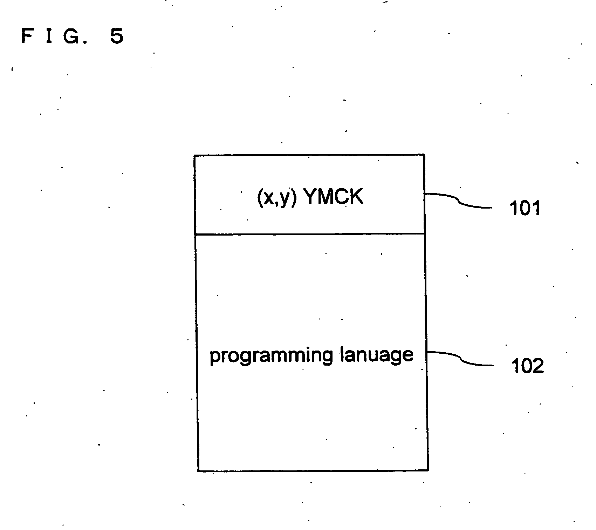

Fig. 5 is an explanatory view showing a data structure of the data for image creation made in the PDL data creating process 1 by combining the representative point information and the image data for creating prints, corrected at step S13. This data for image creation has an area 101 recording the positions of the representative points and the information on the color tones at the representative points, and an area 102 recording image data written in a programming language.

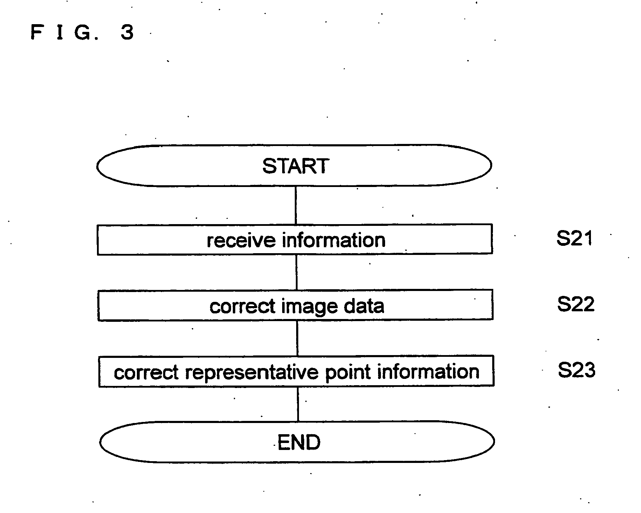

The platemaking data creating process 2 is a process for creating platemaking data based on the PDL data created in the PDL data creating process 1. The platemaking data creating process 2 is performed according to the flow chart shown in Fig. 3.

Specifically, the platemaking data creating process 2 starts with receipt of the image data and the representative point information stored in the representative point information storing step (step S14) of the PDL data creating process 1 and including the information on the positions of the representative points and on the color tones at the representative points (step S21). More particularly, this information receiving step is executed by reading the data for image creation shown in Fig. 5 and stored on a storage medium such as a hard disk or magneto-optical disk. Alternatively, the information may be received through an on-line circuit or the like.

Next, the image data is corrected and stored (step S22). When correcting the image data, the color space obtained in the preceding, PDL data creating process 1 is converted into a color space required for printing, by using a color space profile and a printing profile, and taking into account characteristics of the printing machine, ink, printing paper and so on used in the printing process. At this time, the representative point information set in the preceding, PDL data creating process 1 is displayed on CRT 21. The image data is corrected so that the color tones at the representative points may agree with target color tones. In the platemaking data creating process 2, therefore, the intents of the operator 19 in charge of the preceding, PDL data creating process 1, e.g. information such as on the positions of the representative points and the corrected color tones, are reflected on the image data correction.

Subsequently, the representative point information is corrected and stored (step S23). The representative point information is corrected by the operator 29 in charge of the platemaking data creating process 2. Basically, the intents of the operator 19 in charge of the preceding, PDL data creating process 1 should prevail as they are. However, when the representative points need to be changed for some reason or other, the representative points are changed in this platemaking data creating process 2. The representative points are changed by the operator 29 in charge of the platemaking data creating process 2, who operates the keyboard 22 and mouse 23 while looking at CRT 21. With a change in the positions of the representative points, the information on the color tones at the representative points in the representative point information is changed to information on the color tones of the positions corrected in the image data correcting step (step S22). The changed representative point information is combined with the image data for making prints, corrected in step S22, to form data for image creation. This data is stored again on the storage medium such as a hard disk or magneto-optical disk.

Representative point information may be added successively as accompanied by its history. For example, the representative point information made in the PDL data creating process 1 may be retained, and representative point information made in the platemaking data creating process 2 may be added to the information retained.

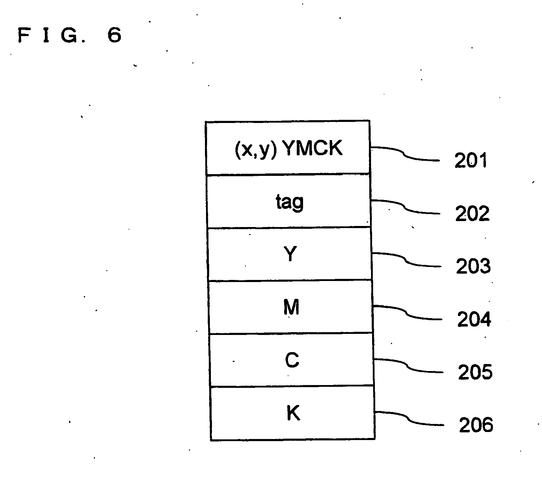

Fig. 6 is an explanatory view showing a data structure of the data for image creation made in the platemaking data creating process 2 by combining the representative point information and the image data for creating prints, corrected at step S13. This data for image creation has an area 201 recording the positions of the representative points and the information on the color tones at the representative points, an area 202 recording tag data, an area 203 recording bitmap data for printing a Y (yellow) image, an area 204 recording bitmap data for printing an M (magenta) image, an area 205 recording bitmap data for printing a C (cyan) image, and an area 206 recording bitmap data for printing a K (black) image.

The printing process 3 is a process for performing printing based on the image data created in the PDL data creating process 1 and platemaking data creating process 2 noted above. The printing process 3 is performed according to the flow chart shown in Fig. 5.

Specifically, the printing process 3 starts with receipt of the image data and the representative point information corrected in the representative point information correcting step (step S23) of the platemaking data creating process 2 and including the information on the positions of the representative points and on the color tones at the representative points (step S31). More particularly, this information receiving step is executed by reading the data for image creation shown in Fig. 6 and stored on the storage medium such as a hard disk or magneto-optical disk.

Next, the image data is corrected (step S32). When correcting the image data, the image data is converted into image data required for controlling ink feeding rates in time of printing, by using the color space profile and printing profile. At this time, the representative point information corrected in the preceding, platemaking data creating process 2 is displayed on CRTs 31 and 33. The image data is corrected so that the color tones at the representative points may agree with target color tones. In the printing process 3, therefore, the intents of the operator 19 in charge of the PDL data creating process 1 and the operator 29 in charge of the platemaking data creating process 2 are reflected on the image data correction.

Subsequently, the representative point information is corrected (step S33). The representative point information is corrected by the operator 39 in charge of the printing process 3. Basically, the intents of the operator 19 in charge of the PDL data creating process 1 and the operator 29 in charge of the platemaking data creating process 2 should prevail as they are. However, when the representative points need to be changed for some reason or other, the representative points are changed in this printing process 3. The representative points are changed by the operator 39 in charge of the printing process 3, who makes necessary inputs while looking at CRT 33 of the color tone management apparatus 32. The information on the color tones at the representative points in representative point information is changed to what has been corrected in the image data correcting step (step S32). The changed representative point information is combined with the image data for making prints, corrected in step S32, to form data for image creation. This data is stored again on the storage medium such as a hard disk or magneto-optical disk.

In this case also, representative point information may be added successively as accompanied by its history. For-example, representative point information made in the platemaking data creating process 2 may be retained, and representative point information made in the printing process 3 may be added to the information retained.

When the data for image creation including the representative point information and image data received by the color tone management apparatus 32 from the preceding, platemaking data creating process 2 is determined inappropriate for printing by the printing machine 30, the information is fed back to the PDL data creating process 1 or platemaking data creating process 2. That is, when the data for image creation made in the PDL data creating process 1 is found inappropriate for printing by the printing machine 30, correction request information 18 is transmitted to the PDL data creating process 1. When the data for image creation made in the platemaking data creating process 2 is found inappropriate for printing by the printing machine 30, correction request information 28 is transmitted to the platemaking data creating process 2. In this event, the PDL data creating process 1 or platemaking data creating process 2 is carried out again according to the sequence shown in Fig. 2 or 3.

Next, printing is performed using the data for image creation (step S34). In time of printing, ink feeding rates and the like in the printing machine 30 are controlled based on the image data corrected in the image data correcting step (step S32).

The image of a print produced is read by a reading device such as a densitometer built in the printing machine 30 (step S35). Data of the image read by the reader is transferred to the color tone management apparatus 32 which determines differences between the color tones at the representative points and the target color tones.

Based on the differences between the color tones at the representative points and the target color tones, the color tone management apparatus 32 transmits data 38 for controlling the ink feeding rates in the printing machine 30 to the printing machine 30. Based on this data, the printing machine 30 controls the ink feeding rates in time of printing. Not only the ink feeding rates, but the dampening water feeding rates may also be controlled.

Steps S35 and S36 is repeated a plurality of times as necessary. Meanwhile, the differences between the color tones at the representative points and the target color tones may stabilize within a set value range. When it is determined that proper printing is performed continuously (step S37), the ink controlling operation is terminated.

When proper printing is not performed in spite of the control of the ink feeding rate carried out for a fixed period, this information is fed back to the PDL data creating process 1 or platemaking data creating process 2. That is, when the improper printing is caused by the data for image creation made in the PDL data creating process 1, correction request information 18 is transmitted to the PDL data creating process 1. When the improper printing is caused by the data for image creation made in the platemaking data creating process 2, correction request information 28 is transmitted to the platemaking data creating process 2. In this event, the PDL data creating process 1 or platemaking data creating process 2 is carried out again according to the sequence shown in Fig. 2 or 3.

In the foregoing embodiment, the image data creating process is made up of the PDL data creating process 1 for creating PDL data, and the platemaking data creating process 2 for creating platemaking data from the PDL data created in the PDL data creating process 1. These processes 1 and 2 may be integrated into a single process. This invention is applicable also to a printing machine using an ink jet printer or the like, which performs printing without creating printing plates.

This invention may be embodied in other specific forms without departing from the spirit or essential attributes thereof and, accordingly, reference should be made to the appended claims, rather than to the foregoing specification, as indicating the scope of the invention.

## Claims

1. A printing control method for controlling color tones of prints at a time of a printing operation having a PDL data creating process (1) for creating PDL data, and a platemaking data creating process (2) for creating platemaking data based on said PDL data, and a printing process (3) for performing multicolored printing based on said platemaking data, wherein
said PDL data creating process (1) includes:
a representative point setting step (S12) for setting positions of representative points (P1-P7) with respect to the areas on the image data corresponding to respective ink key areas of a printing machine for use in controlling color tones in images to be printed; and
a representative point information storing step (S14) for storing representative point information including information on the positions of said representative points (P1-P7) set with respect to the areas on the image data corresponding to respective ink key areas of a printing machine; and
said platemaking data creating process (2) includes:
an information receiving step (S21) for receiving said representative point information along with said PDL data;
a platemaking data creating step (S22) for creating said platemaking data based on said PDL data; and
a representative point information correcting step (S23) for correcting said representative point information, and for storing the corrected representative point information corresponding to the created platemaking data; and
said printing process (3) includes:
an information receiving step (S31) for receiving said representtive point information along with said platemaking data;
a printing executing step (S34) for executing printing with more than one color ink based on said platemaking data; and
a color tone controlling step (S35-S38) for controlling the color tones of said representative points (P1-P7) by using image data of the prints produced in said printing executing step by reading the image of the produced point and said representative point information received from said platemaking data creating process (2).

2. A printing control method as defined in claim 1, wherein said representative point information includes information on color tones at said representative points.

3. A printing control method as defined in claim 1, further comprising:
a representative point information correcting step (S33) for correcting said representative point information stored in said platemaking data creating process (2), after the representative point information is received in said information receiving step (S31).

4. A printing control method as defined in claim 1, wherein said platemaking data creating step (S22) corrects said PDL data so that the color tones at the representative points (P1-P7) agree with target color tones intended by an operator.

5. A printing control method as defined in claim 1, wherein said representative point information is stored by combining with each PDL data and platemaking data.

6. A printing control method as defined in claim 1, wherein said PDL data creating process (1) and said platemaking data creating process (2) are integrated into a single process.

7. An image data creating apparatus for creating image data for producing prints having a PDL data creating unit (10) for creating PDL data, and a platemaking data creating unit (20) for creating platemaking data based on said PDL data, wherein:
said PDL data creating unit (10) includes:
a representative point setting means for setting positions of representative points (P1-P7) with respect to the areas on the image data corresponding to respective ink key areas of a printing machine for use in controlling color tones in images to be printed;
information storage means for storing, along with said PDL data, representative point information including information on the positions of said representative points (P1-P7) set with respect to the areas on the image data corresponding to respective ink key areas of a printing machine; and
said platemaking data creating unit (20) includes:
an information receiving means for receiving said representative point information along with said PDL data from said PDL data creating unit (10);
a platemaking data creating means for creating said platemaking data based on said PDL data,
a representative point information correcting means for correcting said representative point information, and for storing the corrected representative point information corresponding to the created platemaking data.

8. An image data creating apparatus as defined in claim 7, wherein said representative point information includes information on color tones at said representative points.

9. An image data creating apparatus as defined in claim 7, wherein said representative point information are stored by combining with each PDL data and platemaking data.

## Patentansprüche

1. Drucksteuerverfahren zur Steuerung von Farbtönen von Drucken bei Durchführung eines Druckvorgangs mit einem PDL-Datenerzeugungsprozess (1) zur Erzeugung von PDL-Daten und einem Platttenherstellungsdatenerzeugungsprozess (2) zur Erzeugung von Plattenherstellungsdaten beruhend auf den PDL-Daten, und einem Druckprozess (3) zur Durchführung eines Mehrfarbendruckens beruhend auf den Plattenherstellungsdaten, wobei
der PDL-Datenerzeugungsprozess (1) enthält:
einen Repräsentativpunkteinstellschritt (S12) zur Einstellung von Positionen von repräsentativen Punkten (P1-P7) in Bezug auf die Bereiche auf den Bilddaten, die betreffenden Farbzonenschraubenbereichen einer Druckmaschine zur Verwendung bei der Farbtonsteuerung in zu druckenden Bildern entsprechen; und
einen Repräsentativpunktinformationsspeicherschritt (S14) zur Speicherung von Repräsentativpunktinformation, die Information über die Positionen der repräsentativen Punkte (P1-P7), die in Bezug auf die Bereiche auf den Bilddaten, die den betreffenden Farbzonenschraubenbereichen einer Druckmaschine entsprechen, eingestellt sind; und
der Plattenherstellungsdatenerzeugungsprozess (2) enthält:
einen Informationsempfangsschritt (S21) zum Empfang der Repräsentativpunktinformation zusammen mit den PDL-Daten;
einen Plattenherstellungsdatenerzeugungsschritt (S22) zur Erzeugung der Plattenherstellungsdaten beruhend auf den PDL-Daten; und
einen Repräsentativpunktinformationskorrekturschritt (S23) zur Korrektur der Repräsentativpunktinformation und zur Speicherung der korrigierten Repräsentativpunktinformation entsprechend den erzeugten Plattenherstellungsdaten; und
der Druckprozess (3) enthält:
einen Informationsempfangsschritt (S31) zum Empfang der Repräsentativpunktinformation zusammen mit den Plattenherstellungsdaten;
einen Druckausführungsschritt (S34) zur Ausführung eines Druckens mit mehr als einer Druckfarbe beruhend auf den Plattenherstellungsdaten; und
einen Farbtonsteuerschritt (S35-S38) zur Steuerung der Farbtöne der repräsentativen Punkte (P1-P7) unter Verwendung von Bilddaten der im Druckausführungsschritt erzeugte Drucke durch Lesen des Bildes des erzeugten Punktes und der aus dem Plattenherstellungsdatenerzeugungsprozess (2) erhaltenen Repräsentativpunktinformation.

2. Drucksteuerverfahren nach Anspruch 1, wobei die Repräsentativpunktinformation Information über Farbtöne an den repräsentativen Punkten enthält.

3. Drucksteuerverfahren nach Anspruch 1, welches ferner aufweist:
einen Repräsentativpunktinformationskorrekturschritt (S33) zur Korrektur der in dem Plattenherstellungsdatenerzeugungsprozess (2) gespeicherten Repräsentativpunktinformation, nachdem die Repräsentativpunktinformation in dem Informationsempfangsschritt (S31) empfangen worden ist.

4. Drucksteuerverfahren nach Anspruch 1, wobei der Plattendatenerzeugungsschritt (S22) die PDL-Daten so korrigiert, dass die Farbtöne an den repräsentativen Punkten (P1-P7) mit von einem Bediener beabsichtigten Sollfarbtönen übereinstimmen.

5. Drucksteuerverfahren nach Anspruch 1, wobei die Repräsentativpunktinformation unter Kombinieren mit den einzelnen PDL-Daten und Plattenherstellungsdaten gespeichert wird.

6. Drucksteuerverfahren nach Anspruch 1, wobei der PDL-Datenerzeugungsprozess (1) und der Plattenherstellungsdatenerzeugungsprozess (2) in einem einzelnen Prozess integriert sind.

7. Bilddatenerzeugungsvorrichtung zur Erzeugung von Bilddaten für die Erzeugung von Drucken, welche eine PDL-Datenerzeugungseinheit (10) zur Erzeugung von PDL-Daten und eine Plattenherstellungsdatenerzeugungseinheit (20) zur Erzeugung von Plattenherstellungsdaten beruhend auf den PDL-Daten aufweist, wobei
die PDL-Datenerzeugungseinheit (10) enthält:
Repräsentativpunkteinstellmittel zur Einstellung von Positionen von repräsentativen Punkten (P1-P7) in Bezug auf die Bereiche auf den Bilddaten, die den betreffenden Farbzonenschraubenbereichen einer Druckmaschine zur Verwendung bei der Steuerung von Farbtönen in zu druckenden Bildern entsprechen;
Informationsspeichermittel zur Speicherung, zusammen mit den PDL-Daten, von Repräsentativpunktinformation, die Information über die Positionen der repräsentative Punkte (P1-P7) enthält, die in Bezug auf die Bereiche auf den Bilddaten, die betreffenden Farbzonenschraubenbereichen einer Druckmaschine entsprechen, eingestellt sind; und
die Plattenherstellungsdatenerzeugungseinheit (20) enthält:
Informationsempfangsmittel für den Empfang der Repräsentativpunktinformation zusammen mit den PDL-Daten von der PDL-Datenerzeugungseinheit (10);
Plattenherstellungsdatenerzeugungsmittel zur Erzeugung der Plattenherstellungsdaten beruhend auf den PDL-Daten,
Repräsentativpunktinformationskorrekturmittel zur Korrektur der Repräsentativpunktinformation und zur Speicherung der korrigierten Repräsentativpunktinformation entsprechend den erzeugten Plattenherstellungsdaten.

8. Bilddatenerzeugungsvorrichtung nach Anspruch 7, wobei die Repräsentativpunktinformation Information über Farbtöne der Repräsentativpunkte enthält.

9. Bilddatenerzeugungsvorrichtung nach Anspruch 7, wobei die Repräsentativpunktinformation unter Kombinieren mit einem jeden der PDL-Daten und Plattenherstellungsdaten gespeichert wird.

## Revendications

1. Procédé de commande d'impression pour commander des teintes d'impressions à un instant d'une opération d'impression comportant un processus de création de données LDP (1) pour créer des données LDP, et un processus de création de données de réalisation de cliché (2) pour créer des données de réalisation de cliché sur la base desdites données LDP, et un processus d'impression (3) pour effectuer une impression en couleurs sur la base desdites données de réalisation de cliché, dans lequel
ledit processus de création de données LDP (1) comprend :
une étape de détermination de points représentatifs (S12) pour déterminer des positions de points représentatifs (P1 à P7) par rapport aux zones sur les données d'image correspondant à des zones de touche d'encre respectives d'une machine d'impression pour une utilisation pour commander des teintes dans des images à imprimer ; et
une étape de mémorisation d'informations de points représentatifs (S14) pour mémoriser des informations de points représentatifs comprenant des informations concernant les positions desdits points représentatifs (P1 à P7) déterminées par rapport aux zones sur les données d'image correspondant à des zones de touche d'encre respectives d'une machine d'impression ; et
ledit processus de création de données de réalisation de cliché (2) comprend :
une étape de réception d'informations (S21) pour recevoir lesdites informations de points représentatifs avec lesdites données LDP ;
une étape de création de données de réalisation de cliché (S22) pour créer lesdites données de réalisation de cliché sur la base desdites données LDP ; et
une étape de correction d'informations de points représentatifs (S23) pour corriger lesdites informations de points représentatifs, et pour mémoriser les informations de points représentatifs corrigées correspondant aux données de réalisation de cliché créées ; et
ledit processus d'impression (3) comprend :
une étape de réception d'informations (S31) pour recevoir lesdites informations de points représentatifs avec lesdites données de réalisation de cliché ;
une étape d'exécution d'impression (S34) pour exécuter une impression avec plusieurs encres de couleur sur la base desdites données de réalisation de cliché ; et
une étape de commande de teinte (S35 à S38) pour commander les teintes desdits points représentatifs (P1 à P7) en utilisant des données d'image des impressions produites au cours de ladite étape d'exécution d'impression en lisant l'image du point produit et lesdites informations de points représentatifs reçues dudit processus de création de données de réalisation de cliché (2).

2. Procédé de commande d'impression selon la revendication 1, dans lequel lesdites informations de points représentatifs comprennent des informations concernant des teintes au niveau desdits points représentatifs.

3. Procédé de commande d'impression selon la revendication 1, comprenant en outre :
une étape de correction d'informations de points représentatifs (S33) pour corriger lesdites informations de points représentatifs mémorisées au cours dudit processus de création de données de réalisation de cliché (2), après la réception des informations de points représentatifs au cours de ladite étape de réception d'informations (S31).

4. Procédé de commande d'impression selon la revendication 1, dans lequel ladite étape de création de données de réalisation de cliché (S22) corrige lesdites données LDP de sorte que les teintes au niveau des points représentatifs (P1 à P7) correspondent à des teintes cibles voulues par un opérateur.

5. Procédé de commande d'impression selon la revendication 1, dans lequel lesdites informations de points représentatifs sont mémorisées par combinaison avec chaque donnée LDP et donnée de réalisation de cliché.

6. Procédé de commande d'impression selon la revendication 1, dans lequel ledit processus de création de données LDP (1) et ledit processus de création de données de réalisation de cliché (2) sont intégrés en un processus unique.

7. Dispositif de création de données d'image pour créer des données d'image pour produire des points comportant une unité de création de données LDP (10) pour créer des données LDP, et une unité de création de données de réalisation de cliché (20) pour créer des données de réalisation de cliché sur la base desdites données LDP, dans lequel :
ladite unité de création de données LDP (10) comprend :
des moyens de détermination de points représentatifs pour déterminer des positions de points représentatifs (P1 à P7) par rapport aux zones sur les données d'image correspondant à des zones de touche d'encre respectives d'une machine d'impression pour une utilisation pour commander des teintes dans des images à imprimer ;
des moyens de mémorisation d'informations pour mémoriser, avec lesdites données LDP, des informations de points représentatifs comprenant des informations concernant les positions desdits points représentatifs (P1 à P7) déterminées par rapport aux zones sur les données d'image correspondant à des zones de touche d'encre respectives d'une machine d'impression ; et
ladite unité de création de données de réalisation de cliché (20) comprend :
des moyens de réception d'informations pour recevoir lesdites informations de points représentatifs avec lesdites données LDP de ladite unité de création de données LDP (10) ;
des moyens de création de données de réalisation de cliché pour créer lesdites données de réalisation de cliché sur la base desdites données LDP ;
des moyens de correction d'informations de points représentatifs pour corriger lesdites informations de points représentatifs, et pour mémoriser les informations de points représentatifs corrigées correspondant aux données de réalisation de cliché créées.

8. Dispositif de création de données d'image selon la revendication 7, dans lequel lesdites informations de points représentatifs comprennent des informations concernant des teintes au niveau desdits points représentatifs.

9. Dispositif de création de données d'image selon la revendication 7, dans lequel lesdites informations de points représentatifs sont mémorisées par combinaison avec chaque donnée LDP et donnée de réalisation de cliché.
